# EUROPEAN PATENT SPECIFICATION

(11) **EP 2 476 317 B1**
(45) Date of publication and mention of the grant of the patent: **12.02.2014**
(21) Application number: 11195982.1
(22) Date of filing: 29.12.2011
(51) Int. Cl.: A23L 2/02, A23L 2/46, A23L 2/56, A23C 11/10, A23L 2/38

(54) **Almond drinks and methods for their production**
Mandelgetränke und Verfahren zu deren Herstellung
Boissons aux amandes et leurs procédés de production

(43) Date of publication of application: 18.07.2012
(73) Proprietor: Alpro Comm VA, 8560 Wevelgem (BE)
(72) Inventor: Callewaert, Danilo, 8560 Wevelgem (BE); Festjens, Greet, 8560 Wevelgem (BE); Neirynck, Nico, 8560 Wevelgem (BE)
(74) Representative: Vanhalst, Koen

(56) References cited:
- DE-A1- 3 908 704
- US-A- 5 656 321
- US-A1- 2006 198 937
- HANNIGAN K J: "Nutritious beverage drink based on almond powder.", FOOD ENGINEERING 1982, vol. 54, no. 3, March 1982 (1982-03), page 105, XP009159859,

## Description

### TECHNICAL FIELD

The present invention is situated in the field of food technology. In particular, the invention is directed to non-dairy vegetable drinks, more particularly almond-based drinks and methods for producing these. More particularly, the invention provides for bland tasting almond drinks. The invention also provides methods for obtaining such almond drinks.

### BACKGROUND

Almond drinks are nutritious drinks as almonds are rich in proteins and fats. Non-dairy almond drinks essentially comprise ground almonds mixed with water, and may be used as an alternative for animal milk. Not containing any animal product, an almond drink is suitable for vegetarians and vegans. Furthermore, unlike dairy products, health problems associated with lactose, cholesterol, high levels of saturated fats, and traces of growth hormones, are avoided.

The existing almond drinks that are available on the market today can be classified into two groups: 1) almond drinks with a characteristic marzipan taste or smell and 2) almond drinks with a characteristic nutty taste or smell.

The marzipan tasting almond drinks are made through so called "wet processing", i.e. heating the ground almonds in aqueous medium, and they all have a high benzaldehyde content, which may at least in part account for the marzipan taste, as shown in the present application. These drinks are commercially available on the (Southern) European market and are described *inter alia* in GB patent 2413932 and EP patent 0776165. It is no coincidence that the inventors of these patent applications are European residents, i.e. from UK and France, respectively.

The nutty tasting almond drinks are based on roasted almonds. Due to the roasting process, rather high concentrations of pyrazines are detected in these almond drinks, as shown in the present application. These pyrazines may be responsible for the "nutty" taste. These almond drinks are historically sold in the USA and some particulars thereof are described in e.g. US patent 4639374, US patent application 2011/0064862 and PCT application WO99/39591. All inventors of these patent applications are residents of the USA or Japan.

The almond drinks which are currently commercially available do have pronounced flavours which limit the drinkability (the amounts of a drink an average person will consume). Also, due to the pronounced flavours that are already present in the existing almond drinks, it gets much more difficult for clearly and cleanly flavouring these almond drinks. It may be desired to obtain clear chocolate-, vanilla-, strawberry-, etc. flavoured drinks, while profiting from the nutritious properties and the non-dairy character of almond drinks. In addition, the colour of the existing nutty tasting almond drinks is light brown or brownish. For such a drink, it is not possible to obtain a colour which is near the colour of semi-skimmed dairy milk.

Consequently, there remains a need in the art for neutral or bland tasting almond drinks. Further, there remains a need for almond drinks which are easy-to-flavour. Also particularly wanted are almond drinks that are more neutral in colour, preferably resembling the colour of semi-skimmed dairy milk, and which are hence easy-to-colour (e.g. clear and clean yellow colour for a vanilla-flavoured almond drink). In general, there exists a need for improved almond drinks which also exhibit adequate shelf life and stability. It is further desired that such improved almond drinks are obtained by simple processes.

### SUMMARY OF THE INVENTION

The present invention addresses one or more of the above discussed needs in the art.

The inventors have found that by subjecting almonds to a dry heat treatment at between 75°C and 120°C for between 5 and 120 minutes, followed by a dry grinding step to obtain an almond paste, an almond drink with a low benzaldehyde content and a low pyrazines content can be obtained. Such almond drink typically has a bland taste and a colour resembling that of semi-skimmed milk.

The present invention thus provides a method for producing an almond drink, comprising the steps of:
a) subjecting almonds to a dry heat treatment at between 75°C and 120°C for between 5 and 120 minutes,
b) dry grinding the product obtained in step a) such as to form an almond paste, preferably an almond paste having a volume weighed average particle diameter (D[4,3]) of below 30 µm,
c) dispersing the almond paste obtained in step b) in an aqueous medium, optionally adding one or more emulsifiers and/or one or more thickeners,
d) optionally subjecting the product obtained in step c) to a heat treatment, preferably an ultra-high temperature (UHT) heat treatment, and
e) optionally packaging the product obtained in step d).

Preferably, the dry heat treatment is performed at a temperature of between 85°C and 110°C, more preferably at a temperature of between 90°C and 105°C, most preferably at a temperature of between 95°C and 100°C.

It should be noted that the time of the treatment largely depends on the temperature at which the dry heat treatment is carried out. In general, it will take longer when the dry heat treatment is performed at lower temperatures. Preferably, the almonds are dry heat treated for between 10 and 60 minutes, more preferably between 20 and 40 minutes, most preferably about 30 minutes.

Preferably, the dry heat treatment is performed at a temperature of between 85°C and 110°C, for a period of between 5 and 60 minutes, preferably for between 10 and 60 minutes, more preferably for between 20 and 40 minutes, most preferably for about 30 minutes.

Further preferred is a dry heat treatment at a temperature of between 85°C and 110°C, for a period of between 10 and 60 minutes, more preferably between 20 and 40 minutes, most preferably about 30 minutes.

Preferred combinations are a dry heat treatment at between 95°C and 100°C for between 10 and 60 minutes, preferably for between 20 and 40 minutes, more preferably for about 30 minutes. More preferred is a dry heat treatment at about 100°C for about 30 minutes. Other preferred combinations are: a dry heat treatment at between 85°C and 95°C for between 10 and 90 minutes, preferably between 40 and 70 minutes, a dry heat treatment at between 75°C and 85°C for between 30 and 150 minutes, preferably for between 70 and 120 minutes, a dry heat treatment at between 100°C and 110°C for between 5 and 60 minutes, more preferably for between 10 and 30 minutes, or a dry heat treatment at between 110°C and 120°C for between 5 and 60 minutes, preferably between 5 and 35 minutes, more preferably between 5 and 25 minutes.

In a further embodiment, the method of the invention comprises homogenizing the product obtained in step c) prior to the heat treatment of step d) or homogenizing the product obtained in step d) after the heat treatment.

In preferred embodiments of the methods of the invention, the almonds are broken before subjecting the almonds to the dry heat treatment, which renders the heat transfer to the almonds more effective.

In further preferred embodiments of the methods of the invention, the almonds are blanched almonds.

In further preferred embodiments of the methods of the invention, the almonds are sweet almonds.

Preferably, dry grinding in step b) is performed by several cutting and/or milling steps. The size of the almonds may be roughly reduced in a first step, preferably by cutting (e.g. in a Stephan cutter) or milling (e.g. in a ball mill or bead mill), resulting in a first almond paste with only part of the oil liberated. The almond particles may be further reduced in a second dry grinding step such that nearly all almond cells will be broken, preferably by milling (e.g. in a ball mill). The resulting average particle size (D[4,3]) will be typically below 30 µm, more preferably below 20 µm. Accordingly, in preferred embodiments of the methods of the invention, step b) comprises cutting and/or milling the almonds, preferably cutting or milling the almonds in a first step and milling the cut or milled almonds in a second step, preferably by using a ball mill or bead mill.

Dry grinding the almonds to an almond paste having a volume weighed average particle diameter (D[4,3]) of below 30 µm offers the advantage that the almond paste can be stably dispersed in a liquid, preferably an aqueous medium, more preferably water.

In embodiments of the methods of the invention, one or more ingredients selected from the group comprising: sweeteners, flavourings, health-related supplements and salts are added in step c).

In another aspect, the present invention provides an almond drink having a concentration of pyrazines below 1 ppm and a benzaldehyde concentration below 1 ppm.

Preferably, the almond drink of the invention has a benzaldehyde concentration below 0.5 ppm and a concentration of pyrazines below 0.5 ppm, more preferably a benzaldehyde concentration below 0.3 ppm and a concentration of pyrazines below 0.2 ppm.

It should be noted that these low concentrations of benzaldehyde and pyrazines allow to distinguish the almond drink of the invention from commercially available almond drinks, which are either characterized by a low concentration of pyrazines and a high concentration of benzaldehyde (marzipan tasting almond drinks) or a low benzaldehyde concentration and a high concentration of pyrazines (nutty tasting almond drinks). Off course, flavouring the nutty tasting almond drinks with benzaldehyde (added as a separate flavouring), would result in nutty and marzipan tasting almond drinks.

In another embodiment, the almond drink of the invention can be further characterized as having a hexanal concentration below 0.02 ppm, more preferably below 0.01 ppm.

Preferably, the almond drink of the invention has a benzaldehyde concentration below 0.5 ppm and a concentration of pyrazines below 0.5 ppm, more preferably a benzaldehyde concentration below 0.3 ppm and a concentration of pyrazines below 0.2 ppm, and preferably a hexanal concentration below 0.02 ppm, more preferably below 0.01 ppm.

The concentration of benzaldehydes and pyrazines in the almond drink of the invention is preferably determined using HeadSpace Solid-Phase Micro-Extraction (HS-SPME) and/or Gas-Chromatography-Mass-Spectrometry (GC-MS) technologies in order to achieve a (semi)quantitative measurement.

In a further preferred embodiment of the current invention, said almond drink, after UHT heat treatment, is further characterized by having a Hunter Lab lightness (L) value of above 75.

Yet another aspect of the present invention provides for the use of an almond drink produced by the methods as taught herein or the almond drink as taught herein for the production of food products.

### BRIEF DESCRIPTION OF THE DRAWINGS

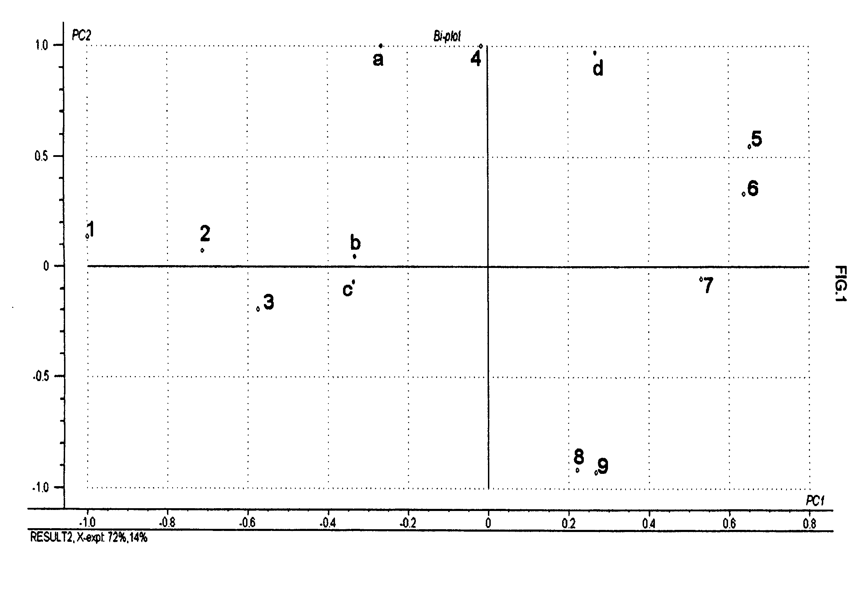

**FIG. 1** **Classification of almond drinks using principal component analysis.** The almond drinks of the invention (spots 8 and 9) may be distinguished from "marzipan tasting almond drinks" with high benzaldehyde concentration and low concentration of pyrazines available on the European market (spots 4-7) and from the "nutty tasting roasted almond drinks" with high concentration of pyrazines and low concentration of benzaldehyde, typically available on the US market (spots 1-3). Legend: (spot 1): *Pacific* Almond organic/vanilla (US), (spot 2): *Silk Pure Almond* original (US), (spot 3): Hain - *Almond Dream* original (US), (spot 4): *Ecomil* Almond organic (ES), (spot 5): Latte di Mandorla gli *Sciroppi del Chiosco* (IT), (spot 6): *Perl'Amande* amandine (FR), (spot 7): Latte di Mandorla *Condorelli* (IT), (spot 8): Almond drink- before UHT treatment, (spot 9): Almond drink - after UHT treatment, (spot a): 2,6-dimethylpyrazine, (spot b): 2-ethyl-3,5/6-dimethylpyrazine, (spot c): 2-ethyl-3-methylpyrazine, (spot d): benzaldehyde.

### DETAILED DESCRIPTION OF THE INVENTION

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The term also encompasses "consisting of" and "consisting essentially of".

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of and from the specified value, in particular variations of +/-10% or less, preferably +/-5% or less, more preferably +/-1 % or less, and still more preferably +/-0.1 % or less of and from the specified value, insofar such variations are appropriate to perform in the disclosed invention. It is to be understood that the value to which the modifier "about" refers is itself also specifically, and preferably, disclosed.

When a numerical value is used to indicate temperature, said value encompasses the exact numerical value as such, as well as all numerical values that would be rounded up to said exact numerical value according to standard mathematical and/or statistical regulations. For example, a temperature of "95°C", encompasses the values of 94.5; 94.6; 94.7; 94.8; 94.9; 95.0; 95.1; 95.2; 95.3; and 95.4°C. When this is used in combination with the term "about", said temperature encompasses also temperatures that differ from said exact temperature by 0.1, 0.2, 0.3, 0.4, 0.5, 0.6, 0.7, 0.7, 0.9, or 1.0 °C, both in the positive or negative range.

Similarly, when a period of time is indicated using a numerical value such as "about 1 hour" or "about 60 minutes", said value encompasses the exact time indicated as well as periods that deviate therefrom by e.g. less than one minute, half a minute, or 1, 2, 3, 4, 5, 6, 7, 8, 9, 10, 11, 12, 13, 14 or 15 minutes. Analogously, the term "about 1 hour" encompasses about 45, 50, 55 minutes to about 65, 70, and 75 minutes, as well as any time in between.

As used throughout the present disclosure, the terms "concentration" and "content" are used interchangeably and refer to the weight concentration or mass fraction of a constituent, i.e. the mass of a constituent divided by the total mass of all constituents, and is expressed in mg per kg or parts per million (ppm).

All documents cited in the present specification are hereby incorporated by reference in their entirety.

Unless otherwise specified, all terms used in disclosing the invention, including technical and scientific terms, have the meaning as commonly understood by one of ordinary skill in the art to which this invention belongs. By means of further guidance, term definitions may be included to better appreciate the teaching of the present invention.

The term "almond" as used herein refers to the fruit of the almond tree *Prunus dulcis.* The almond consists of a shell, which is a thick leathery grey-green coat, and a brown seedcoat, called the skin, with the edible seed, commonly called the nut or kernel, inside. Generally, one seed is present, but occasionally there are two.

The almond tree renders predominately sweet almonds, but a few bitter almonds may be found on each tree. Preferably, the almonds that are processed in the methods taught herein are sweet almonds.

Also preferably, the almonds that are processed in the methods taught herein are blanched almonds. As used herein, the term "blanched almonds" refers to de-shelled (also called shelled) almonds (i.e. almonds of which the shell has been removed) of which the seedcoat or skin has been removed. Hence, blanched almonds are de-shelled and de-skinned almonds. Blanched almonds may be obtained through treating the de-shelled almonds with hot water to soften the seedcoat such that it can be removed.

### Process for producing an almond drink

A first aspect of the present invention relates to a method for producing an almond drink, comprising the steps of:
a) subjecting almonds to a dry heat treatment at between 75°C and 120°C for between 5 and 120 minutes,
b) dry grinding the almonds obtained in step a) such as to form an almond paste, preferably an almond paste having a volume weighed average particle diameter of below 30 µm,
c) dispersing the almond paste obtained in step b) in an aqueous medium, optionally adding one or more emulsifiers and/or one or more thickeners,
d) optionally subjecting the product obtained in step c) to a heat treatment, preferably an UHT heat treatment, and
e) optionally packaging the product obtained in step d).

The steps of this method will be further clarified in the following passages.

### Step a) Dry heat treatment

In a first step of the method as taught herein, the almonds are subjected to a dry heat treatment comprising heating the almonds under dry conditions for between 5 minutes and 120 minutes. The temperature of the dry heat treatment is typically comprised between 75°C and 120°C, preferably between 85°C and 110°C, more preferably between 90°C and 105°C, most preferably between about 95°C and about 100°C, including 93, 93.5, 94, 94.5, 95, 95.5, 96, 96.5, 97, 97.5, 98, 98.5, 99, 99.5, 100, 100.5, 101, 101.5, and 102°C.

These temperatures allow distinguishing the dry heat treatment from roasting, which typically is carried out at more elevated temperatures.

The time of treatment is inherently linked to the heating temperature or in other words, the heating temperature determines the time of treatment. Time and heating temperature are inversely linked, e.g. the time of treatment can be reduced by elevating the heating temperature.

Preferably, said dry heat treatment is performed for a time of between 10 minutes and 60 minutes, more preferably between 20 minutes and 40 minutes, most preferably about 30 minutes

Preferred combinations are a dry heat treatment at between 95°C and 100°C for between 20 and 40 minutes, more preferably at about 100°C for about 30 minutes. Other preferred combinations are a dry heat treatment at between 85°C and 95°C for between 40 and 70 minutes, a dry heat treatment at between 75°C and 85°C for between 70 and 120 minutes, a dry heat treatment at between 100°C and 110°C for between 10 and 30 minutes or a dry heat treatment at between 110°C and 120°C for between 5 and 25 minutes.

As noted the dry heat treatment is carried out under dry conditions, which means that dry heat is used. Typical devices which may be used for the dry heat treatment are ovens, such as a convection oven or hot air oven. Heating the almonds under dry conditions allows distinguishing the dry heat treatment from cooking, which is typically carried out under wet conditions.

By wet heat treatments (as known in the art), such as cooking, the formation of substantial quantities of benzaldehyde in the final almond drink can not be avoided. The inventors have surprisingly realized that by subjecting the almonds to a dry heat treatment, followed by a dry grinding step in order to obtain an almond paste, and dispersing this almond paste in an aqueous medium, an almond drink with a very limited concentration of benzaldehyde can be obtained. Such an almond drink has no "marzipan" taste or smell. Without wanting to be bound by any theory, it is possible that during dry heat treatment there is not enough water available for activating enzymes involved in the formation of benzaldehyde, such as, for example, amygdalin which is known to be able to convert amygdalin into glucose, hydrogencyanide, and benzaldehyde. In other words, the mobility of the enzymes is too limited. Furthermore, a dry heat treatment may denature (in part) such enzymes. Next to the dry heat treatment, also the dry grinding step may be essential for avoiding the formation of benzaldehyde. During grinding, and especially fine grinding, there is no or very limited contact with water, which may also limit enzyme mobility and functioning.

Optionally, the almonds may be broken before subjecting the almonds to a dry heat treatment.

The term "breaking" as used herein denotes the process of reducing the size of the almonds by a factor of 4, 8, 16 or 32. Breaking can be performed by using corrugated rolls or cracking rolls or breaking rolls (e.g. in a Bühler crushing mill OLCB).

Broken almonds offer the advantage of having an increased surface area as compared to non-broken almonds, which may be advantageous for the subsequent effectiveness of the dry heat treatment.

### Step b): Grinding

The methods as taught herein encompass dry grinding the almonds that have been subjected to a dry heat treatment to obtain an almond paste having a suitable particle size, preferably an almond paste having a volume weighed average particle diameter (D[4,3]) of below 30 µm, more preferably below 20 µm. Optionally, other components, preferably components in powder form, may be added before or during this grinding step.

The term "grinding" as used herein denotes the process of crushing almonds to almond particles with a suitably small particle size. The term "dry grinding" as used herein particularly refers to grinding under dry conditions.

Grinding of the almonds may be achieved using available apparatus and known techniques for producing almond pastes, for example, but without limitation, by using a Stephan cutter, a Bühler cutting mill type SCS-4, a ball mill such as a Bühler ball mill Nova(TM) 2000 or the like or any combination thereof.

In preferred embodiments of the methods of the invention, step b) comprises cutting and/or milling the almonds, preferably cutting or milling the almonds in a first step and milling the cut or milled almonds in a second step. Preferably, dry grinding is performed by several cutting and/or milling steps. The size of the almonds may be roughly reduced in a first step, preferably by cutting (e.g. in a Stephan cutter) or by milling (e.g. in a ball mill or bead mill), resulting in a first almond paste with only part of the oil liberated. In a second dry grinding step the particle size may be further reduced such that nearly all almond cells are broken. This can be performed by milling (e.g. in a ball mill). The resulting average particle size (D[4,3]) will be typically below 30 µm, more preferably below 20 µm.

Grinding the almonds to dimensions below the dimensions of an almond cell, preferably below a D[4,3] of 30 µm, will liberate the almond cell content, which is mainly composed of almond oil.

Grinding the almonds to an almond paste having a D[4,3] of below 30 µm, preferably below 20 µm, offers the advantage that the almond paste can be stably dispersed in a liquid, preferably an aqueous medium, more preferably water. Optionally, emulsifiers and/or thickeners may be added before, during or after the dispersion of the almond paste in the aqueous medium, in order to further improve the stability of the almond drink. Furthermore, such fine grinding offers the advantage that no additional filtration or centrifugation step needs to be carried out for removing coarse particles.

### Step c): Dispersion

In a further step of the methods as taught herein, the almond paste is dispersed in a liquid, preferably an aqueous medium, more preferably water, and optionally mixed with one or more additional ingredients.

The term "dispersing" generally refers to the process of dissolving particles in a continuous phase of a different composition (or state). As used herein, the term "dispersing" specifically refers to the process of dissolving almond paste in an aqueous medium.

The almond paste may be dispersed into the liquid by stirring or mixing, e.g. using a high shear mixer, a lab mixer, a liquiverter, a rotor-stator type mixer, a blender, etc.

### Step d): Heat treatment

The product may then optionally be pasteurized or sterilized (at a high temperature) for the time necessary for obtaining the desired pasteurizing or sterilizing value, resulting in a product having a longer shelf life. Accordingly, in a next step of the methods as taught herein, the product may be subjected to a heat treatment.

Preferably, the product is subjected to an ultra-high temperature - short time (UHT-ST) or ultra-high temperature (UHT) heat treatment, shortly termed UHT treatment or UHT. The terms "UHT-ST treatment", "UHT treatment" and "ultra-high temperature processing" are synonyms and denote the sterilization of food by heating it for an extremely short period, preferably between 1 and 10 seconds, at a temperature exceeding 135 °C, such as e.g. at a temperature of between 140 °C and 150 °C, which is the temperature required to kill any residing spores.

Preferably, moist heat sterilization is applied to sterilize the product, i.e. sterilization utilizing injection of steam.

In a preferred example, direct UHT is applied to sterilize the product, more preferably direct steam injection UHT. Such direct UHT may comprise directly injecting steam into the product. Typically, the steam that is added to the product (and that may dilute the product), is afterwards removed in a flash vessel such that the ingoing dry matter more or less equals the outgoing dry matter. In the flash vessel, not only water vapour will be removed, but also other volatile components, such as aldehydes, benzaldehyde, pyrazines, etc., as shown in the present application.

### Step e): Packaging

The final product, in particular the almond drink, may finally be packed in any type of recipient, bottle or package. Non-limiting examples are e.g. the Tetrapak® cardboard packages, plastic, PET, or glass tons, cans or bottles, for distribution and sale to consumers.

### Homogenization

To further reduce the particle size of the oil globules or other almond particles or cells, a homogenization step may optionally be carried out.

Homogenization may be carried out by passing the product under high pressure through a small orifice. For example, the product may be exposed to a homogenization pressure of between 50 and 200 bar (5 en 20 MPa, respectively). Said homogenization may be accomplished in one stage or using two stages, each with a different pressure, e.g. exposing the product to a homogenization pressure of e.g. 50 bar at the second stage and of e.g. 200 bar at the first stage. In another example, an ultra-high homogenization pressure may be used, whereby the product may be exposed to a homogenization pressure of about 2000 bar (or 200 MPa). For this purpose, a high pressure homogenizer may be used, such as a homogenizer sold under the trademarks Rannie, Stork or Gaulin.

Said homogenization step may be carried out before or after the UHT heat treatment of the product.

### The almond drink of the invention

In another aspect, the present invention relates to an almond drink.

As used herein, the terms "almond drink" or "almond milk" refer to an almond-based drink or beverage. Such almond drink may comprise an almond paste mixed with water, or a water-based beverage, such as tea, coffee or fruit juice. Preferably, the almond paste is mixed with a non-dairy aqueous medium, preferably water, resulting in a non-dairy almond drink.

As used herein, the term "almond paste" refers to any ground or liquefied form of almond and encompasses, for example, but without limitation, almond butter, almond cream or any combination thereof.

### Analysis of chemical components in the almond drink of the present invention

The almond drink of the present invention is characterized in that it has both a low concentration of benzaldehyde and a low concentration of pyrazines.

### Benzaldehyde

Benzaldehyde is an aromatic aldehyde consisting of a benzene ring with a formyl substituent. This colorless liquid has a characteristic marzipan-like or almond-like odor. Benzaldehyde is the primary component of bitter almond oil (i.e. oil from bitter almonds, typically taken from bitter almond tree), but it can also be extracted from a number of other natural sources or it can be chemically or synthetically produced by a number of processes known in the art. It is commonly used to confer a marzipan or almond flavour to e.g. food or cosmetic products. Next to enzymatic pathways for the formation of benzaldehyde, also chemical pathways for the formation of benzaldehyde exist.

The almond drink of the present invention has a benzaldehyde concentration below 1 ppm, preferably below 0.5 ppm, more preferably below 0.3 ppm, such as below 0.2 ppm or 0.1 ppm, yet more preferably below 0.05 ppm.

### Pyrazines

In general, the term "pyrazine" refers to a heterocyclic aromatic organic compound, which has a 6-membered ring structure consisting of four carbon atoms and two nitrogen atoms.

As used herein, the terms "pyrazines concentration" or "concentration of pyrazines" denote the sum of the individual concentrations of 2,6-dimethylpyrazine; 2-ethyl-3-methylpyrazine; 2-ethyl-3,5-dimethylpyrazine and 2-ethyl-3,6-dimethylpyrazine. These alkylated pyrazines (or alkylpyrazines) consist of a pyrazine ring with alkyl substituents attached to the ring. Typically, such alkylated pyrazines may be formed as volatiles during the Maillard reaction that occurs upon (over-)heating food (e.g. through roasting almonds or through indirect UHT heat treatment of the almond drink) and these alkylated pyrazines may confer the "roasted" flavour and odor to the heated foods.

The almond drink of the present invention has a concentration of pyrazines of below 1 ppm, such as below 0.9 ppm, 0.8 ppm, 0.7 ppm, 0.6 ppm, 0.5 ppm, 0.4 ppm, 0.3 ppm, 0.2 ppm or 0.1 ppm. Typically, said pyrazines are alkylated pyrazines.

In a preferred embodiment of the almond drink of the present invention, the almond drink has a benzaldehyde concentration of below 1 ppm and a concentration of pyrazines of below 1 ppm, preferably a benzaldehyde concentration of below 0.5 ppm and a concentration of pyrazines of below 0.5 ppm, more preferably a benzaldehyde concentration of below 0.3 ppm and a concentration of pyrazines of below 0.2 ppm, most preferably a benzaldehyde concentration of below 0.2 ppm and a concentration of pyrazines of below 0.1 ppm.

### Hexanal

Hexanal or hexanaldehyde is an alkyl aldehyde. This volatile may be indicative of fatty acid decomposition of the almond drink.

The almond drink of the present invention may be further characterized as having a hexanal concentration of below 0.02 ppm, preferably below 0.015 ppm, more preferably below 0.01 ppm, yet more preferably below 0.005 ppm.

### Branched aldehydes

The term "branched aldehydes" or "branched-chain aldehydes" generally refers to aldehydes that have an alkyl side-chain.

As used herein, the term "concentration of branched aldehydes" denotes the sum of the individual concentrations of 2-methylpropanal, 2-methylbutanal and 3-methylbutanal.

The almond drink of the present invention may be further characterized in that it has a concentration of branched aldehydes of below 0.02 ppm, preferably below 0.015 ppm, more preferably below 0.01 ppm, yet more preferably below 0.005 ppm.

### Flavour

As used in the context of the present invention, the term "flavour" has its common meaning in the art, which may be described as the sensory impression of a food or other substance, determined mainly by the chemical senses of taste and smell. Testing flavour is typically done by a panel of a certain number (e.g. five) of individuals that have to indicate a score assessed on a point system from 0 to 5 for each different type of flavour, taste or smell sensation. A high score in a category indicates a strong intensity of a particular flavour. Typical sensations tested are: "sweetness", "rancidity", "acidity"; "bitterness"; "astringency"; "saltyness"; "alkalinity"; "grilled/roasted taste"; "fruity taste"; "aromatic taste"; "wine taste", "earthy taste"; "mouldy taste"; "smoky taste"; "hay/wood taste"; "marzipan taste"; "nut taste"; "raw taste"; or being "bland" or "neutral" in taste etc. "Bland" or "neutral" taste in view of the present invention implies the absence of a strong "marzipan" or "roast" taste.

The almond drink of the present invention may hence be further characterized as having a score of 0 for the flavour "marzipan" and a score of 0 or 1 for the flavour "roasted". Accordingly, the almond drink of the present invention may be denoted as "bland" tasting, which may be advantageous if one intends to add specific flavourings to the almond drink.

### Colour

Colour of food products is often defined using the Hunter "*L a b*" colour space system developed, which is based on a three-dimensional colour scheme (www.hunterlab.com). The "L" value represents lightness and changes from 0 (black) to 100 (white). The "a" value changes from -a (greenness) to +a (redness) while the "b" value is from -b (blueness) to +b (yellowness).

Typically, the almond drink of the present invention has the appearance of semi-skimmed dairy milk and may have a "L" value of above 75, which is higher than e.g. the known roasted almond drinks.

The values depicted herein are merely seen as exemplary values, based on the experimental data at hand. The values should not be seen as explicitly limiting the scope of the present invention.

### Additional ingredients

Additional ingredients may be mixed with the almond paste upon dispersing the almond paste in the aqueous medium. These ingredients may be added to the almond paste or the aqueous mediums.

Although the almond paste itself contains emulsifiers, an emulsifier may preferably be added when dispersing the almond paste in the aqueous medium. This emulsifier may be added to the aqueous medium or to the almond paste. As used herein, the term "emulsifier" denotes a substance that stabilizes an emulsion, i.e. a mixture of two or more liquids. An emulsifier may disperse the fat released from the ground almonds in an aqueous medium, preferably water, in the form of an oil-in-water emulsion.

One class of emulsifiers is known as surface active substances or surfactants. Non-limiting examples of suitable emulsifiers include lecithin and mono- and diglycerides of fatty acids.

Also preferably, one or more thickeners may be added. The thickener may keep most of the almond oil globules and/or other almond particles in dispersion. In addition, a thickener may provide a degree of viscosity and richer mouthfeel to the dispersion.

Non-limiting examples of suitable thickeners include:
(I) Seaweed polysaccharides, such as agar, carrageenan, and sodium alginate;
(II) Seed mucilages, such as locust bean gum, guar gum, and tamarind gum;
(III) Mucilages, such as gum arabic, tragacanth gum, and karaya gum;
(IV) Fruit mucilages, such as pectin and arabinogalactan;
(V) Bacterial mucilages, such as xanthan gum, pullulan, and curdlan;
(VI) Starches, and processed starches, such as modified starch, dextrin, carboxymethyl starch (CMS), and starchphosphates;
(VII) Cellulosic mucilages, such as micro-crystalline cellulose, carboxymethyl cellulose (CMC), methyl cellulose (MC), and sodium cellulose glycolate;

The above thickeners may be used alone or in combination depending on the characteristics of the final product desired.

Sweeteners and/or other flavourings may be optionally mixed with the almond paste. The term "flavouring" as used herein generally refers to any substance that may be safely used in food, the function of which is to impart flavour. Non-limiting examples of sweeteners and/or flavourings are sugar, including sucrose, glucose, fructose, maltose, inverted sugar, or any other sweet monosaccharide or disaccharide, or sweet polyhydric alcohol, sugar cane juice, stevia extract, vanilla flavouring, strawberry flavouring, fruit flavouring, chocolate flavouring (e.g. cocoa powder), and/or some other suitable sweetener and/or flavouring.

Another optional ingredient that may be mixed with the almond paste is a health-related supplement, i.e. a food additive that is intended to confer a health benefit to the consumer.

Non-limiting examples of health-related supplements include calcium carbonate (CaCO₃), vitamin A, vitamin B2, vitamin B12, vitamin D, vitamin E, zinc, fiber, protein, potassium, phosphorus, fatty acids (e.g. omega 3, omega 6), oligosaccharide, and/or any other suitable health-related supplement. Preferably, said health-related supplement may be selected based at least in part on a neutral-taste quality that may have little or no impact on the overall taste of the final product.

Also optionally, a salt agent may be mixed with the almond paste. Said salt agent may have a flavouring, stabilizing and/or buffering effect.

Non-limiting examples of suitable salt agents include: sea salt (e.g. sodium chloride), a potassium phosphate (e.g. monopotassium phosphate (KH₂PO₄), dipotassium phosphate (K₂HPO₄), tripotassium phosphate (K₃PO₄), a sodium phosphate (e.g. disodium phosphate (Na₂HPO₄)) or a calcium phosphate (e.g. tricalcium phosphate Ca₃(PO₄)₂).

Preferably, a mixture of the ingredients described above may be formulated as a dry blend that may be mixed with the almond paste. Such dry blend may be a powder mixture of two or more of the ingredients described above.

The present invention will be described in greater detail below with the aid of the examples which follow. It goes without saying, however, that these examples are given by way of illustration of the invention and does not constitute in any manner a limitation thereof.

### EXAMPLES

### Example 1: Preparation of an almond drink

An almond drink was prepared according to the method of the invention.

In particular, 30 kg of blanched almonds were broken approximately into 8 pieces using corrugated rolls (Bühler crushing mill OLCB). 200 g of the broken almonds were subjected to a dry heat treatment in a hot air oven at 100°C for about 30 minutes. Thereafter, they were ground to an almond paste using a tabletop Stephan cutter (Stephan UM5 Primecut), which was cutting at maximum speed while scraping the inner surface. The particle size was measured using a Malvern Mastersizer S (static light scattering principle, sample was diluted 20-fold with isopropylalcohol prior to measurement) and the volume weighed average particle diameter D[4,3] was measured to be about 51 µm. The almond paste was ground to smaller diameters using a laboratory bead mill Dispermat SL50, after which a D[4,3] of about 16 µm was measured. Next, 125 g of almond paste was blended with 2.5 g soybean lecithin, after which the blend was dispersed in 4689 g water using a high shear mixer. In a next step, a dry blend was mixed into the dispersion using a T50 basic Ultra-Turrax. This dry blend contained 150 g white sugar, 20 g tricalcium phosphate, 8 g sea salt, 4 g guar gum and 1.5 g xanthan gum. The resulting almond drink was subjected to an UHT heat treatment at 142 °C for about 5 seconds using direct steam injection, after which the drink was homogenized aseptically at 200 bar (or 20 MPa) and filled in small containers. Heat treatment and homogenization were performed in an Armfield FT74DI Steam injection UHT system.

As shown in the examples below, these almond drinks, both before and after UHT heat treatment, were analyzed for their chemical composition (by the analytical centre: Laboratory of Enzyme, Fermentation, and Brewing Technology (EFBT), KAHO Sint-Lieven, Gent, Belgium), flavour and colour and compared with the analyses of almond drinks that are commercially available (Silk Pure Almond original (US), Hain - Almond Dream original (US), Pacific Almond organic/vanilla (US), EcoMil Almond organic (ES), Latte di Mandorla gli Sciroppi del Chiosco (IT), Latte di Mandorla Condorelli (IT) and Perl'Amande amandina (FR)).

### Example 2: Determination of aldehydes (acetaldehyde, 2-methylpropanal, 2-methylbutanal, 3-methylbutanal, diacetyl, hexanal, furfural, methional, benzaldehyde, and phenylacetaldehyde) in almond milk through HeadSpace Solid Phase MicroExtraction (HS-SPME) and GasChromatography-MassSpectrometry (GC-MS)

### Sample preparation

4 mL of almond milk was brought in a CombiPal extraction vial and deuterated benzaldehyde was added as an internal standard (concentration in the extraction vial was 1 µg/L). The extraction vial was sealed with a magnetic bimetal crimp cap with silicone/Teflon septum.

### Extraction

The selective extraction of aldehydes from almond milk through HS-SPME is based on loading the extraction fiber with derivatizing agent PFBOA [o-(2,3,4,5,6-pentafluorobenzyl)-hydroxylamine] and happened in an automated way by use of a CombiPal autosampler (CTC Analytics, Zwingen, Switzerland).

Some details: Extractionfiber: 65 µm PDMS/DVB (Supelco, Bellefonte, PA, USA). Loading the extraction fiber with PFBOA: 10 minutes at 30°C. Extraction and derivatization of the aldehydes: 30 minutes at 50°C. Agitator (autosampler): 250 rounds per minute.

### GC-MS details and conditions

GC: Ultra Trace gas chromatograph (Interscience, Louvain-la-Neuve, Belgium). Thermal desorption of derivatizated aldehydes: split/splitless injector, 250°C, 3 minutes, split ratio: 1/10. Capillary column: RTX-1 (Restek Corporation, Bellefonte, PA, USA).

Oven programme: 50°C (2 minutes at 50 °C), temperature raise speed: 6°C/minute, endtemperature: 250°C.

MS: Dual Stage Quadrupool (DSQII, Interscience, Louvain-la-Neuve, Belgium); electron ionisation (EI: 70 eV); source temperature: 240°C; electron multiplier: 1445 V; selected ion monitoring: m/z=181; SIM width: 1.0; dwell time: 100 ms.

### Quantitative determination of aldehydes

Known concentrations of aldehyde reference components (e.g. benzaldehyde) were subjected to the same extraction and detection procedure as an almond milk sample. For a quantitative determination of benzaldehyde in almond milk samples an external 8-points calibration curve (concentration range: 50 to 1500 µg aldehyde reference component per L mQ-water) was made (X-axis: concentration of benzaldehyde; Y-axis: surface benzaldehyde divided by surface internal standard).

### Results

The aldehyde concentrations of the almond drinks are summarized in Table 1.

The almond drink of the invention is characterized by a low benzaldehyde concentration, similar to "US almond drinks", as compared to "European almond drinks", that are characterized by a high benzaldehyde concentration.

It is further characterized by lower concentrations of hexanal and branched aldehydes (2-methylpropanal, 2-methylbutanal and 3-methylbutanal) especially in comparison to the concentrations measured in commercially available almond drinks in the US.

When comparing the almond drink before and after UHT heat treatment, it appears that after steam injection, when removing water vapour in the flash vessel, also a part of the aldehydes are removed, as indicated by measurement of lower concentrations of aldehydes after UHT heat treatment.

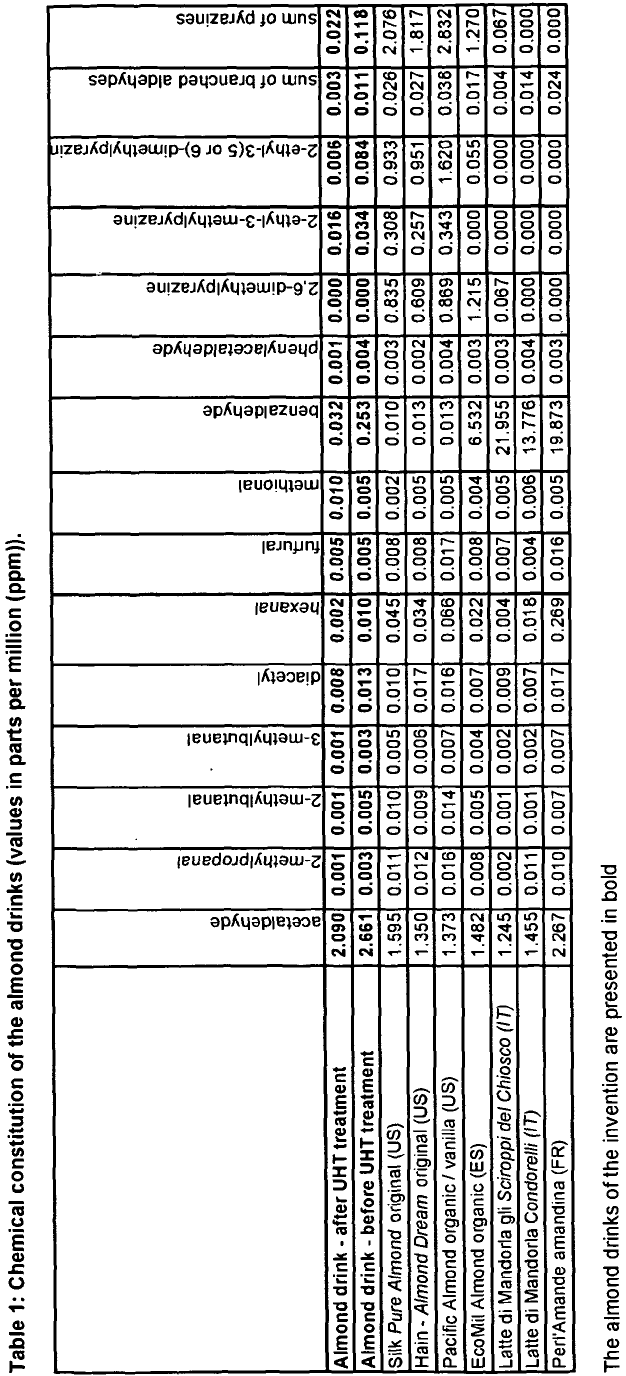

### Example 3: Determination of pyrazines (2,6-dimethylpyrazine; 2-ethyl-3-methylpyrazine; and 2-ethyl-3,(5 or 6)dimethylpyrazine) in almond milk through HeadSpace Solid Phase MicroExtraction (HS-SPME) and GasChromatography-MassSpectrometry (GC-MS)

### Sample preparation

10 mL almond milk was pipetted in a CombiPal extraction vial, in which 2.0 g NaCl present (pro analysis NaCl, Merck, Darmstadt, Germany)was already. 20 µL n-Dodecane (26,22 µg/mL; Sigma-Aldrich, St. Louis, MO, USA) was added as an internal standard, as a control for the extraction. Afterwards, the extraction vial was immediately sealed with a magnetic bimetal crimp cap with silicone/Teflon septum.

### Extraction

Extraction of the volatile components happened by HS-SPME and was automated through the use of a CombiPal autosampler (CTC Analytics, Zwingen, Zwitserland).

Some details: Extraction fiber: 65 µm PDMS/DVB (Supelco, Bellefonte, PA, USA). Extraction time and temperature: 60 minutes at 80°C. Agitator (autosampler): 250 rpm

### GC-MS details and conditions

GC: Ultra Trace gas chromatograph (Interscience, Louvain-la-Neuve, Belgium). Thermal desorption: 250°C, 3 minutes, splitless injection. Capillary column: RTX-1 (Restek Corporation, Bellefonte, PA, USA).

Oven programme: 40°C (3 minutes at 40 °C), temperature raise speed: 6°C/minute, endtemperature: 250°C

MS: Dual Stage Quadrupool (DSQI, Interscience, Louvain-la-Neuve, Belgium); electron ionisation (EI: 70 eV); source temperature: 240°C; electron multiplier: 1400 V; Full Scan detection (40-250), 3.5 scans/s; selected ion monitoring: m/z=108, 121, 122, 136; SIM width: 1; dwell time: 100 ms.

### Semi-quantitative determination of pyrazines

Known concentrations of pyrazine reference components (2,6-dimethylpyrazine (96 µg/L), 2-ethyl-3-methylpyrazine (40 µg/L), and 2-ethyl-3(5 or 6)-dimethylpyrazine (120 µg/L)) were subjected to the same extraction and detection procedure as an almond milk sample. Semi-quantitative concentrations of the pyrazines in the almond milk samples were determined according to the following: Cₓ=C_{RC}. Aₓ/A_{RC} (Cₓ: concentration of the pyrazine to be determined; C_{RC}: concentration of the pyrazine reference component; Aₓ: peak area of the pyrazine to be determined; A_{RC}: peakarea of the pyrazine reference component). Peakareas were determined on basis of extract of m/z=108 (2,6-dimethylpyrazine); m/z=121,122 (2-ethyl-3-methylpyrazine); m/z=136 [2-ethyl-3,(5 or 6)-dimethylpyrazine] from the SIM-chromatograms.

### Results

The pyrazines concentrations of the almond drinks are summarized in Table 1.

The almond drink of the invention is characterized by a low pyrazine concentration, similar to "European almond drinks", in contrast to "US almond drinks", which are characterized by a high pyrazine concentration.

When comparing the almond drink before and after UHT heat treatment, it appears that after steam injection, when removing water vapour in the flash vessel, also a part of the pyrazines are removed, as indicated by measurement of lower concentrations of pyrazines after UHT heat treatment.

When combining the results of the benzaldehyde and pyrazines analyses, we can conclude that the almond drink is characterized by a low benzaldehyde concentration and a low pyrazines concentration. This feature allows to distinguish the almond drink of the invention from the commercially available almond drinks that either have a low benzaldehyde concentration and a high pyrazines concentration ("US almond drinks") or a low pyrazines concentration and a high benzaldehyde concentration ("European almond drinks") (Fig. 1).

### Example 4: Evaluation of the flavour of the almond drinks

The flavour of the almond drinks was evaluated by a trained taste panel that was asked to give a score from 0 (low intensity of the tested flavour) to 5 (strong intensity of the tested flavour) to the samples of the almond drinks for "marzipan" flavour and "nutty" flavour.

The different scores are summarized in Table 2. The results indicate that the almond drink of the invention may be characterized as bland tasting. This result corresponds with the chemical analyses that show that the almond drink of the invention has both a low benzaldehyde concentration and a low pyrazine concentration. In contrast, almond drinks available in the US taste and smell nutty, whereas "European almond drinks" have a marzipan flavour and taste.

**Table 2: Flavour of the almond drinks**

| | "marzipan" taste | "nutty taste" |
|---|---|---|
| **Almond drink - after UHT treatment** | **0** | **0** |
| **Almond drink - before UHT treatment** | **0** | **0** |
| *Silk Pure Almond* original (US) | 0 | 3 |
| Hain - *Almond Dream* original (US) | 0 | 2 |
| Pacific Almond organic / vanilla (US) | 0 | 3 |
| EcoMil Almond organic (ES) | 4 | 0 |
| Latte di Mandorla gli *Sciroppi del Chiosco (IT)* | 3 | 0 |
| Latte di Mandorla *Condorelli (IT)* | 5 | 0 |
| Perl'Amande amandina (FR) | 4 | 0 |

| | | |
|---|---|---|
| The almond drinks of the invention are presented in bold | | |

### Example 5: Evaluation of the colour of the almond drinks

The colour of the almond drinks was measured with a CM-600D spectrophotometer of Konica Minolta and is described by the *L a b* system, wherein L stands for lightness and varies from 0 to 100 i.e. from dark to light, "a" represents the difference between green (-128) and red (128) and "b" represents the difference between blue (-128) and yellow (128).

The *L a b* values of the almond drinks are summarized in Table 3.

**Table 3: Colour of the almond drinks**

| | L | a | b |
|---|---|---|---|
| **Almond drink - after UHT treatment** | **75.93** | **-2.61** | **8.29** |
| **Almond drink - before UHT treatment** | **60.47** | **-2.67** | **5.23** |
| Silk *Pure Almond* original (US) | 71.81 | -0.18 | 8.09 |
| Hain - *Almond Dream* original (US) | 73.79 | -0.06 | 7.11 |
| Pacific Almond organic / vanilla (US) | 67.80 | 0.67 | 13.50 |
| EcoMil Almond organic (ES) | 76.19 | 0.82 | 8.15 |
| Latte di Mandorla gli *Sciroppi del Chiosco (IT)* | 79.12 | -0.15 | 6.93 |
| Latte di Mandorla *Condorelli (IT)* | 81.85 | -0.30 | 4.43 |
| Perl'Amande amandina (FR) | 79.63 | -0.05 | 6.96 |

| | | | |
|---|---|---|---|
| The almond drinks of the invention are presented in bold | | | |

Visual evaluation of the almond drinks reveals that the almond drink of the invention, after an UHT heat treatment, is lighter in colour than e.g. the commercial drinks produced from roasted almonds (e.g. US products in Table 3). In particular, the L value of the almond drink of the invention, after being subjected to a UHT heat treatment, is higher than 75.

## Claims

1. A method for producing an almond drink, comprising the steps of:
a) subjecting almonds to a dry heat treatment at between 75°C and 120°C for between 5 and 120 minutes,
b) dry grinding the almonds obtained in step a) such as to form an almond paste, preferably an almond paste having a volume weighed average particle diameter of below 30 µm,
c) dispersing the almond paste obtained in step b) in an aqueous medium, optionally adding one or more emulsifiers and/or one or more thickeners,
d) optionally subjecting the product obtained in step c) to a heat treatment, preferably an ultra-high temperature (UHT) heat treatment, and
e) optionally packaging the product obtained in step d).

2. The method according to claim 1, further comprising homogenizing the product obtained in step c) prior to the heat treatment of step d) or homogenizing the product obtained in step d) after said heat treatment.

3. The method according to claim 1 or 2, wherein said almonds are broken before subjecting them to the dry heat treatment of step a).

4. The method according to any one of claims 1 to 3, wherein said almonds are blanched almonds.

5. The method according to any one of claims 1 to 4, wherein said almonds are sweet almonds.

6. The method according to any one of claims 1 to 5, wherein step b) comprises cutting and/or milling the almonds, preferably wherein the almonds are subjected to cutting or milling in a first step and subsequently to further milling in a second step.

7. The method according to any one of claims 1 to 6, wherein in step c) one or more ingredients selected from the group comprising: sweeteners, flavourings, health-related supplements and salts are added.

8. The method according to any one of claims 1 to 7, wherein said dry heat treatment is performed at a temperature of between 85°C and 110°C, more preferably between 90°C and 105°C, most preferably between 95°C and 100°C.

9. The method according to any one of claims 1 to 8, wherein said dry heat treatment is performed for a time of between 10 minutes and 60 minutes, more preferably between 20 minutes and 40 minutes, most preferably about 30 minutes.

10. An almond drink having a concentration of pyrazines of below 1 ppm and a benzaldehyde concentation of below 1 ppm.

11. The almond drink according to claim 10, having a hexanal concentration of below 0.02 ppm.

12. The almond drink according to claim 10 or 11, wherein said concentration of benzaldehydes and pyrazines is determined using HeadSpace Solid-Phase Micro-Extraction (HS-SPM E) and/or Gas-Chromatography-Mass-Spectrometry (GC-MS).

13. The almond drink according to any one of claims 10 to 12, wherein said almond drink, after UHT heat treatment, is further **characterized by** having a Hunter Lab lightness (L) value of above 75.

14. Use of an almond drink produced by the method according to any one of claims 1 to 9, or the almond drink according to any one of claims 10 to 13, for the production of food products.

## Patentansprüche

1. Verfahren zur Herstellung eines Mandelgetränks, umfassend die Schritte des:
a) Unterwerfens von Mandeln einer Trockenhitzebehandlung bei 75 °C bis 120 °C 5 bis 120 Minuten lang,
b) Trockenen Mahlens der in Schritt a) erhaltenen Mandeln, derart, dass eine Mandelpaste, bevorzugt eine Mandelpaste, die einen volumengewichteten durchschnittlichen Teilchendurchmesser von weniger als 30 µm aufweist, gebildet wird,
c) Dispergierens der in Schritt b) erhaltenen Mandelpaste in einem wässrigen Medium, wahlweise unter Zugabe eines oder mehrerer Emulgatoren und/oder eines oder mehrerer Verdickungsmittel,
d) Wahlweisen Unterwerfens des in Schritt c) erhaltenen Produkts einer Hitzebehandlung, bevorzugt einer Ultrahochtemperatur- (UHT-) Hitzebehandlung und
e) Wahlweisen Verpackens des in Schritt d) erhaltenen Produkts.

2. Verfahren nach Anspruch 1, des Weiteren das Homogenisieren des in Schritt c) erhaltenen Produkts vor der Hitzebehandlung von Schritt d) oder das Homogenisieren des in Schritt d) erhaltenen Produkts nach der Hitzebehandlung umfassend.

3. Verfahren nach Anspruch 1 oder 2, wobei die Mandeln vor Unterwerfen derselben der Trockenhitzebehandlung von Schritt a) zerbrochen werden.

4. Verfahren nach einem der Ansprüche 1 bis 3, wobei die Mandeln blanchierte Mandeln sind.

5. Verfahren nach einem der Ansprüche 1 bis 4, wobei die Mandeln süße Mandeln sind.

6. Verfahren nach einem der Ansprüche 1 bis 5, wobei Schritt b) das Schneiden und/oder Mahlen der Mandeln umfasst, wobei bevorzugt die Mandeln Schneiden oder Mahlen in einem ersten Schritt und daraufhin weiterem Mahlen in einem zweiten Schritt unterworfen werden.

7. Verfahren nach einem der Ansprüche 1 bis 6, wobei in Schritt c) eine oder mehrere Zutaten aus der Gruppe umfassend: Süßungsmittel, Aromastoffe, auf die Gesundheit bezogene Ergänzungsmittel und Salze zugegeben werden.

8. Verfahren nach einem der Ansprüche 1 bis 7, wobei die Trockenhitzebehandlung bei einer Temperatur zwischen 85 °C und 110 °C, noch bevorzugter zwischen 90 °C und 105 °C, am bevorzugtesten zwischen 95 °C und 100 °C durchgeführt wird.

9. Verfahren nach einem der Ansprüche 1 bis 8, wobei die Trockenhitzebehandlung für eine Zeitspanne zwischen 10 Minuten und 60 Minuten, noch bevorzugter zwischen 20 Minuten und 40 Minuten, am bevorzugtesten etwa 30 Minuten lang durchgeführt wird.

10. Mandelgetränk, das eine Konzentration von Pyrazinen von weniger als 1 ppm und eine Benzaldehydkonzentration von weniger als 1 ppm aufweist.

11. Mandelgetränk nach Anspruch 10, das eine Hexanalkonzentration von weniger als 0,02 aufweist.

12. Mandelgetränk nach Anspruch 10 oder 11, wobei die Konzentration von Benzaldehyden und Pyrazinen unter Anwendung der Kopfraum-Festphasen-Mikroextraktion (HS-SPME) und/oder Gaschromatographie-Massenspektrometrie (GC-MS) bestimmt wird.

13. Mandelgetränk nach einem der Ansprüche 10 bis 12, wobei das Mandelgetränk nach der UHT-Hitzebehandlung des Weiteren **dadurch gekennzeichnet ist, dass** es einen Hunter Lab-Helligkeits- (L-) Wert von über 75 aufweist.

14. Verwendung eines Mandelgetränks, das durch das Verfahren nach einem der Ansprüche 1 bis 9 hergestellt worden ist, oder Mandelgetränk nach einem der Ansprüche 10 bis 13 zur Herstellung von Nahrungsmittelprodukten.

## Revendications

1. Procédé de production d'une boisson aux amandes, comprenant les étapes consistant à :
a) soumettre les amandes à un traitement de séchage à l'air chaud sec entre 75 °C et 120 °C pendant 5 à 120 minutes,
b) broyer à sec les amandes obtenues à l'étape a) de façon à former une pâte d'amande, de préférence une pâte d'amande ayant un diamètre moyen des particules pondéré en fonction du volume inférieur à 30 µm,
c) disperser la pâte d'amande obtenue à l'étape b) dans un milieu aqueux, ajouter facultativement un ou plusieurs émulsifiants et/ou un ou plusieurs épaississants,
d) facultativement soumettre le produit obtenu à l'étape c) à un traitement thermique, de préférence un traitement thermique à ultra-haute température (UHT), et
e) facultativement conditionner le produit obtenu à l'étape d).

2. Procédé selon la revendication 1, comprenant en outre l'étape consistant à homogénéiser le produit obtenu à l'étape c) avant le traitement thermique de l'étape d) ou à homogénéiser le produit obtenu à l'étape d) après ledit traitement thermique.

3. Procédé selon la revendication 1 ou 2, dans lequel lesdites amandes sont cassées avant d'être soumises au traitement de séchage à l'air chaud sec de l'étape a).

4. Procédé selon l'une quelconque des revendications 1 à 3, dans lequel lesdites amandes sont des amandes blanchis.

5. Procédé selon l'une quelconque des revendications 1 à 4, dans lequel lesdites amandes sont des amandes douces.

6. Procédé selon l'une quelconque des revendications 1 à 5, dans lequel l'étape b) comprend l'étape consistant à découper et/ou broyer les amandes, de préférence dans lequel les amandes sont soumises à un découpage ou un broyage lors d'une première étape puis à un nouveau broyage lors d'une deuxième étape.

7. Procédé selon l'une quelconque des revendications 1 à 6, dans lequel dans l'étape c), un ou plusieurs ingrédients choisis dans le groupe constitué par les édulcorants, les arômes, les compléments alimentaires et les sels sont ajoutés.

8. Procédé selon l'une quelconque des revendications 1 à 7, dans lequel ledit traitement de séchage à l'air chaud sec est effectué à une température comprise entre 85 °C et 110 °C, plus préférablement entre 90 °C et 105 °C, le plus préférablement entre 95 °C et 100 °C.

9. Procédé selon l'une quelconque des revendications 1 à 8, dans lequel ledit traitement de séchage à l'air chaud sec est effectué pendant une durée de 10 minutes à 60 minutes, plus préférablement de 20 minutes à 40 minutes, le plus préférablement d'environ 30 minutes.

10. Boisson aux amandes ayant une concentration en pyrazines inférieure à 1 ppm et une concentration en benzaldéhydes inférieure à 1 ppm.

11. Boisson aux amandes selon la revendication 10, ayant une concentration en hexanal inférieure à 0,02 ppm.

12. Boisson aux amandes selon la revendication 10 ou 11, dans laquelle ladite concentration en benzaldéhydes et en pyrazines est déterminée par micro-extraction en phase solide à partir de l'espace de tête (HS-SPME) et/ou chromatographie en phase gazeuse couplée à la spectrométrie de masse (CPG-SM).

13. Boisson aux amandes selon l'une quelconque des revendications 10 à 12, laquelle boisson aux amandes, après traitement UHT, est en outre **caractérisée en ce qu'**elle possède une valeur de luminosité (L) Hunter-Lab supérieure à 75.

14. Utilisation d'une boisson aux amandes produite par le procédé selon l'une quelconque des revendications 1 à 9, ou de la boisson aux amandes selon l'une quelconque des revendications 10 à 13, pour la production de produits alimentaires.
